# EUROPEAN PATENT APPLICATION

(11) **EP 4 685 192 A1**
(43) Date of publication of application: **28.01.2026**
(21) Application number: 24774708.2
(22) Date of filing: 07.03.2024
(51) Int. Cl.: C08L 83/04, C08K 3/20, C08K 3/28

(54) **THERMALLY CONDUCTIVE SILICONE COMPOSITION, CURED PRODUCT THEREOF, AND METHOD FOR PRODUCING SAME**

(30) Priority: 22.03.2023 JP 2023045014
(71) Applicant: SHIN-ETSU CHEMICAL CO., LTD., Tokyo 100-0005 (JP)
(72) Inventor: IWATA, Mitsuhiro, Annaka-shi, Gunma 379-0224 (JP)
(74) Representative: Mewburn Ellis LLP
(86) International application number: PCT/JP2024/008832
(87) International publication number: WO 2024/195569

(57) **Abstract**

This thermally conductive silicone composition contains
(A) an organopolysiloxane,
(B) an aluminum oxide powder,
(C) an amorphous aluminum nitride powder having a BET specific surface area of 1.0-4.0 m²/g and an average particle diameter of 0.5-5 µm, and
(D) an organopolysiloxane having, in one molecule, at least one silyl group represented by general formula (1)

-SiR¹ₐ(OR²)₃₋ₐ (1) ,

and having a viscosity of 0.01-30 Pa·s at 25°C. The thermally conductive silicone composition is particularly suitable as a heat dissipation member for an electronic component and has excellent insulation properties and thermal conductivity.

## Description

### TECHNICAL FIELD

This invention relates to a silicone composition having excellent heat conduction and more particularly, to a heat conductive silicone composition having excellent electrical insulation and a cured product thereof, which can be used as a heat dissipating member for electronic parts and built in electronic devices without causing damage to heat-generating electronic parts such as power devices, transistors, thyristors, and central processing units (CPUs), and also relates to a method for producing the same.

### BACKGROUND ART

For heat-generating electronic parts such as power devices, transistors, thyristors, and CPUs, how to remove the heat generated during service is an important issue. As the prior art heat removal means, it is a common practice to mount a heat-generating electronic part on a heat radiating fin or metal plate via an electrically insulating, heat dissipating sheet for heat release. The heat dissipating sheet used is made of a silicone resin having a heat conductive filler dispersed therein.

Since modern electronic parts generate larger amounts of heat in proportion to an increase in the integration of circuits in the parts, importance is given to heat conductivity at high temperatures such as 100°C or above, and especially in an environment at 150°C in some cases. For this reason, there is a need for a material having a significantly higher heat conductivity than in the prior art. For the purpose of increasing the heat conductivity of heat transfer materials, it is a common practice to incorporate highly heat conductive fillers such as aluminum oxide powder and aluminum nitride powder in matrix resins (Patent Documents 1 to 4: JP-A 2005-162555, JP-A 2003-342021, JP-A 2002-280498, and JP-A 2005-209765).

As the means for increasing heat conductivity, Patent Document 5: JP 5755977 discloses a highly heat conductive resin composition in which a spherical aluminum oxide powder having a specific average sphericity, a specific hydroxy content, and having a specific average particle size of 10 to 50 µm and an aluminum oxide powder having a specific average particle size of 0.3 to 1 µm are present in a specific volume ratio and in a specific content. However, the spherical aluminum oxide powder having an average particle size of 50 µm at the maximum gives rise to the problem of insufficient thermal conductivity.

Also, a heat conductive silicone composition comprising an alumina powder having an average particle size of 0.1 to 100 µm is proposed, but a thermal conductivity and viscosity are not prescribed. Further, Patent Document 6: WO 2002/092693 discloses a heat conductive silicone composition in which a spherical alumina powder having an average particle size of 5 to 50 µm (exclusive of 5 µm) and a spherical or irregular shape alumina powder having an average particle size of 0.1 to 5 µm are present in a specific weight ratio and in a specific content. Like Patent Document 5, the average sphericity and hydroxy content of the spherical alumina having a large average particle size are prescribed nowhere. This is insufficient to achieve a high thermal conductivity.

In this respect, a heat conductive silicone composition has been proposed which comprises a spherical aluminum oxide powder having an average sphericity of 0.8 or higher, containing 30 or less hydroxy groups per square nanometer (nm²), and having an average particle size of 50 to 150 µm. However, the heat conductive silicone composition has a limitation in further increasing the thermal conductivity, while maintaining the fluidity.

### PRIOR ART DOCUMENTS

### PATENT DOCUMENTS

Patent Document 1: JP-A 2005-162555
Patent Document 2: JP-A 2003-342021
Patent Document 3: JP-A 2002-280498
Patent Document 4: JP-A 2005-209765
Patent Document 5: JP 5755977
Patent Document 6: WO 2002-092693
Patent Document 7: JP 6648837

### SUMMARY OF INVENTION

### TECHNICAL PROBLEM

An object of the invention, which has been made under the above-mentioned circumstances, is to provide a heat conductive silicone composition that has excellent electrical insulation and heat conduction and that is particularly preferable as a heat dissipating member for electronic parts.

### SOLUTION TO PROBLEM

Making extensive investigations to attain the above object, the inventor has found that the above-described object can be achieved by blending the following components:
(A) an organopolysiloxane;
(B) a spherical aluminum oxide powder having an average sphericity of 0.8 or higher, containing 30 or less hydroxy groups per square nanometer, and having an average particle size of 50 to 150 µm;
(C) an irregular shape aluminum nitride powder having a BET specific surface area of 1.0 to 4.0 m²/g, and having an average particle size of 0.5 to 5 µm; and
(D) an organopolysiloxane containing per molecule at least one silyl group represented by the following general formula (1):

   -SiR¹ₐ(OR²)₃₋ₐ (1) ,
wherein R¹ is independently an unsubstituted or substituted monovalent hydrocarbon group, R² is independently an alkyl, alkoxyalkyl, alkenyl or acyl group, and "a" is 0, 1 or 2, and having a viscosity at 25°C of 0.01 to 30 Pa·s, wherein
the resultant blending proportion of component (B) to component (C) in volume ratio and the resultant total amount of components (B) and (C) are within specific ranges, thus completing the present invention. The silicone composition can also be converted to a curable composition by blending a curing agent therein.

Accordingly, the invention provides the following invention.
1. A heat conductive silicone composition, comprising:
   (A) an organopolysiloxane;
   (B) a spherical aluminum oxide powder having an average sphericity of 0.8 or higher, containing 30 or less hydroxy groups per square nanometer, and having an average particle size of 50 to 150 µm;
   (C) an irregular shape aluminum nitride powder having a BET specific surface area of 1.0 to 4.0 m²/g, and having an average particle size of 0.5 to 5 µm; and
   (D) an organopolysiloxane containing per molecule at least one silyl group represented by the following general formula (1):

      -SiR¹ₐ(OR²)₃₋ₐ (1) ,
   wherein R¹ is independently an unsubstituted or substituted monovalent hydrocarbon group, R² is independently an alkyl, alkoxyalkyl, alkenyl or acyl group, and "a" is 0, 1 or 2, and having a viscosity at 25°C of 0.01 to 30 Pa·s, wherein
   a blending proportion of component (B) to component (C) in volume ratio ((B):(C)) is 5:5 to 8:2, the total amount of components (B) and (C) is 52 to 79% by volume of the heat conductive silicone composition, and the heat conductive silicone composition has a viscosity at 25°C of 30 to 800 Pa·s as measured by a spiral viscometer at a number of revolutions of 10 rpm and has a thermal conductivity of 8.0 W/m·K or higher as measured by the hot disk method according to ISO 22007-2.
2. The heat conductive silicone composition according to 1, further comprising (E) an aluminum nitride powder having an oxygen content of 0.5% by weight or lower, having a BET specific surface area less than 1.0 m²/g and having an average particle size of 10 to 40 µm, and the ratio of coarse particles of 44 to 105 µm is 10.0% by weight or less of the entire component (E) in a volume-based laser diffraction particle size distribution.
3. The heat conductive silicone composition according to 2, wherein the total amount of components (B), (C) and (E) is 80 to 85% by volume of the heat conductive silicone composition, the amount of component (E) is 30 to 35% by volume of the heat conductive silicone composition, and the thermal conductivity is 8.5 W/m·K or higher as measured by the hot disk method according to ISO 22007-2.
4. The heat conductive silicone composition according to any one of 1 to 3, further comprising a curing agent.
5. The heat conductive silicone composition according to 4, which is of addition reaction cure type, condensation reaction cure type or organic peroxide cure type.
6. The heat conductive silicone composition according to 5, which is of addition reaction cure type.
7. A cured product of the heat conductive silicone composition according to any one of 4 to 6.
8. A production method for producing the heat conductive silicone composition according to any one of 1 to 6, comprising the step of mixing
   (A) an organopolysiloxane,
   (B) a spherical aluminum oxide powder having an average sphericity of 0.8 or higher, containing 30 or less hydroxy groups per square nanometer, and having an average particle size of 50 to 150 µm,
   (C) an irregular shape aluminum nitride powder having a BET specific surface area of 1.0 to 4.0 m²/g, and having an average particle size of 0.5 to 5 µm, and
   (D) an organopolysiloxane containing per molecule at least one silyl group represented by the following general formula (1):

      -SiR¹ₐ(OR²)₃₋ₐ (1) ,
   wherein R¹ is independently an unsubstituted or substituted monovalent hydrocarbon group, R² is independently an alkyl, alkoxyalkyl, alkenyl or acyl group, and "a" is 0, 1 or 2, and having a viscosity at 25°C of 0.01 to 30 Pa·s, wherein
   the resultant blending proportion of component (B) to component (C) in volume ratio ((B):(C)) is 5:5 to 8:2, and the resultant total amount of components (B) and (C) is 52 to 79% by volume of the heat conductive silicone composition.

### ADVANTAGEOUS EFFECTS OF INVENTION

According to the invention, there is provided a heat conductive silicone composition having excellent electrical insulation and heat conduction.

### DESCRIPTION OF EMBODIMENTS

Now the invention is described in detail. It is noted that the term "heat conductive silicone composition" is sometimes abbreviated as "silicone composition."

### [Component (A)]

Component (A) is an organopolysiloxane which is a base in the inventive silicone composition. As component (A), one organopolysiloxane can be used alone, or two or more organopolysiloxanes can be used in combination. Examples of silicon-bonded groups in the organopolysiloxane include straight alkyl groups such as methyl, ethyl, propyl, butyl, pentyl, hexyl, heptyl, octyl, nonyl, decyl, undecyl, dodecyl, tridecyl, tetradecyl, pentadecyl, hexadecyl, heptadecyl, octadecyl, nonadecyl, and eicosyl; branched alkyl groups such as isopropyl, tertiary butyl, isobutyl, 2-methylundecyl, and 1-hexylheptyl; cyclic alkyl groups such as cyclopentyl, cyclohexyl, and cyclododecyl; alkenyl groups such as vinyl, allyl, butenyl, pentenyl, and hexenyl; aryl groups such as phenyl, tolyl, and xylyl; aralkyl groups such as benzyl, phenethyl, and 2-(2,4,6-trimethylphenyl)propyl; and halogenated alkyl groups such as 3,3,3-trifluoropropyl and 3-chloropropyl. Inter alia, alkyl, alkenyl and aryl groups are preferred, with methyl, vinyl and phenyl being most preferred.

The organopolysiloxane has a viscosity at 25°C which is preferably 20 to 100,000 mPa·s, more preferably 50 to 100,000 mPa·s, even more preferably 50 to 50,000 mPa·s, most preferably 100 to 50,000 mPa·s, but not limited thereto. If the viscosity is too low, there is a risk that the silicone composition considerably degrades in its physical properties. If the viscosity is too high, there is a risk that the silicone composition considerably degrades in its handleability and workability. It is noted that the absolute viscosity is measured by a rotational viscometer (hereinafter, the same holds true, unless otherwise specified).

The organopolysiloxane has a molecular structure which may be straight, branched, partially branched straight, or dendritic (dendrimer), for example, but not limited thereto, and preferred is straight or partially branched straight. Examples of the organopolysiloxane include a homopolymer having such a molecular structure, a copolymer composed of such molecular structures, and mixtures of these polymers.

Specific examples include molecular chain both end dimethylvinylsiloxy-capped dimethylpolysiloxane, molecular chain both end methylphenylvinylsiloxy-capped dimethylpolysiloxane, molecular chain both end dimethylvinylsiloxy-capped dimethylsiloxane/methylphenylsiloxane copolymers, molecular chain both end dimethylsiloxy-capped dimethylsiloxane/methylvinylsiloxane copolymers, molecular chain both end trimethylsiloxy-capped dimethylsiloxane/methylvinylsiloxane copolymers, molecular chain both end dimethylvinylsiloxy-capped methyl(3,3,3-trifluoropropyl)polysiloxane, molecular chain both end silanol-capped dimethylsiloxane/methylvinylsiloxane copolymers, molecular chain both end silanol-capped dimethylsiloxane/methylvinylsiloxane/methylphenylsiloxane copolymers, organosiloxane copolymers consisting of siloxane units of the formula: (CH₃)₃SiO_{1/2}, siloxane units of the formula: (CH₃)₂(CH₂=CH)SiO_{1/2}, siloxane units of the formula: CH₃SiO_{3/2}, and siloxane units of the formula: (CH₃)₂SiO_{2/2}, molecular chain both end silanol-capped dimethylpolysiloxane, molecular chain both end silanol-capped dimethylsiloxane/methylphenylsiloxane copolymers, molecular chain both end trimethoxysiloxy-capped dimethylpolysiloxane, molecular chain both end trimethoxysilyl-capped dimethylsiloxane/methylphenylsiloxane copolymers, molecular chain both end methyldimethoxysiloxy-capped dimethylpolysiloxane, molecular chain both end triethoxysiloxy-capped dimethylpolysiloxane, and molecular chain both end trimethoxysilylethyl-capped dimethylpolysiloxane. One of these siloxanes may be used alone or two or more thereof may be used in a suitable combination.

In the embodiment wherein the silicone composition cures through hydrosilylation reaction, component (A) is preferably (A-I) an organopolysiloxane having on average 0.1 or more silicon-bonded alkenyl groups per molecule, more preferably an organopolysiloxane having on average 0.5 or more silicon-bonded alkenyl groups per molecule, even more preferably an organopolysiloxane having on average 0.8 or more silicon-bonded alkenyl groups per molecule. If the average number of silicon-bonded alkenyl groups per molecule is less than the lower limit of the range, there is a tendency that the resulting silicone composition does not cure sufficiently. Examples of the silicon-bonded alkenyl group in the organopolysiloxane include alkenyl groups as exemplified above, preferably vinyl. Examples of silicon-bonded groups other than the alkenyl group in the organopolysiloxane include straight alkyl groups, branched alkyl groups, cyclic alkyl groups, aryl groups, aralkyl groups, and halogenated alkyl groups as mentioned above. Of these, alkyl and aryl groups are preferred, with methyl and phenyl being most preferred.

In the embodiment wherein the silicone composition cures through condensation reaction, component (A) is preferably (A-II) an organopolysiloxane having at least two silanol groups or silicon-bonded hydrolyzable groups per molecule. Examples of the silicon-bonded hydrolyzable group in the organopolysiloxane include alkoxy groups such as methoxy, ethoxy and propoxy; alkenoxy groups such as vinyloxy, propenoxy, isopropenoxy, and 1-ethyl-2-methylvinyloxy; alkoxyalkoxy groups such as methoxyethoxy, ethoxyethoxy, and methoxypropoxy; acyloxy groups such as acetoxy and octanoyloxy; ketoxime groups such as dimethylketoxime and methylethylketoxime; amino groups such as dimethylamino, diethylamino, and butylamino; aminoxy groups such as dimethylaminoxy and diethylaminoxy; and amide groups such as N-methylacetamide and N-ethylacetamide. Examples of silicon-bonded groups other than the silanol group and silicon-bonded hydrolyzable group in the organopolysiloxane include straight alkyl groups, branched alkyl groups, cyclic alkyl groups, alkenyl groups, aryl groups, aralkyl groups, and halogenated alkyl groups as mentioned above.

In the embodiment wherein the silicone composition cures through free radical reaction with the aid of organic peroxide, the organopolysiloxane as component (A) is preferably (A-III) an organopolysiloxane having at least one silicon-bonded alkenyl group per molecule, though not limited thereto. Examples of the silicon-bonded alkenyl group in the organopolysiloxane include straight alkyl groups, branched alkyl groups, cyclic alkyl groups, alkenyl groups, aryl groups, aralkyl groups, and halogenated alkyl groups, as mentioned above. Of these, alkyl, alkenyl and aryl groups are preferred, with methyl, vinyl and phenyl being most preferred.

Component (A) is preferably blended in an amount of 1.0 to 4.0% by weight, more preferably 1.0 to 3.0% by weight of the silicone composition.

### [Component (B)]

Component (B) is a spherical aluminum oxide powder having an average sphericity of 0.8 or higher, containing 30 or less hydroxy groups per square nanometer, and an average particle size of 50 to 150 µm. Two or more multiple species having different average particle sizes may be used in combination, as long as the above ranges are met.

The aluminum oxide powder may have either a single crystalline structure or a polycrystalline structure. The crystal phase of the aluminum oxide powder is preferably the α-phase in terms of high heat conductivity, and the specific gravity is preferably 3.7 (g/cm³) or higher. A specific gravity of 3.7 or higher results in reduced proportions of pores and low-crystallinity phases present in the particles, enabling further increase in thermal conductivity. The particle size of the aluminum oxide powder can be tailored by classification and mixing operations.

The average sphericity is at least 0.8, and more preferably at least 0.9. If the average sphericity is less than 0.8, fluidity may decline and contact between particles may remarkably increase, with the tendency that the sheet surface becomes more ragged, leading to increased interfacial thermal resistance and poor thermal conductivity. Although the upper limit is not particularly limited, the closer to sphere (an average sphericity of 1), the more preferable.

As used herein, the average sphericity can be measured by taking a particle image under a scanning electron microscope, inputting the image to an image analyzer, for example, model JSM-7500F manufactured by JEOL Ltd., and performing the following steps. That is, the projection area (X) and circumferential length (Z) of a particle are measured from the photograph. Provided that a true circle corresponding to the circumferential length (Z) has an area (Y), the sphericity of the particle can be represented as X/Y. Assume a true circle having the same circumferential length as the circumferential length (Z) of a sample particle. Since Z = 2πr and Y = πr², then Y = π*(Z/2π)², the sphericity of an individual particle can be computed as sphericity = X/Y = X*4π/Z². In this way, the sphericity of arbitrary 100 particles is determined, and their average value is reported as average sphericity.

The number of hydroxy groups is 30 or less per square nanometer, and preferably 25 or less per square nanometer. The lower limit is not particularly limited, and may be 5 per square nanometer. If the number of surface hydroxy groups exceeds 30 per square nanometer, the aluminum oxide powder is difficult to load into the silicone composition, so that there arises a tendency toward lowered thermal conductivity.

The number of the above-described hydroxy groups in the present invention, i.e., the surface hydroxy group density can be determined by the Karl Fischer coulometric titration method, for example, with "a trace water measuring instruments CA-100" (trade name) manufactured by Mitsubishi Chemical Corporation. Specifically, 0.3 to 1.0 g of a sample is placed in a water vaporizer, and is heated to raise the temperature with an electric heater, while supplying dehydrated argon gas as a carrier gas. In the Karl Fischer coulometry, water generated in the temperature range from 200°C to 900°C is defined as the surface hydroxy content. The surface hydroxy density is calculated from the amount of water measured and the specific surface area.

The average particle size is 50 to 150 µm, and preferably 60 to 140 µm. If the average particle size is less than 50 µm, contact between particles decreases, with a tendency for thermal conductivity to decline due to an increase of inter-particle thermal contact resistance. Meanwhile, if the average particle size exceeds 150 µm, the sheet surface becomes more ragged, leading to increased interfacial thermal resistance in some cases, and there is a tendency of aggravating the ease of loading.

As used herein, the average particle size can be determined by using a laser diffraction particle size distribution analyzer, for example, a laser diffraction particle size distribution analyzer SALD-2300 manufactured by Shimadzu Corporation. A test sample is prepared by adding 50 cc of pure water and 5 g of a heat conductive powder to be measured to a glass beaker, agitating the contents with a spatula, and then conducting dispersion treatment in an ultrasonic cleaner for 10 minutes. Using a dropping pipette, droplets of the suspension of the powder of the heat transfer material as dispersion-treated were added one by one to the sampler section of the analyzer until an absorbance becomes steady enough to perform the measurement. Measurement is made at the point of time when the absorbance becomes steady. The laser diffraction particle size distribution analyzer is designed such that a particle size distribution is calculated from data of the light intensity distribution of diffracted/scattered light from particles as detected by the sensor. The average particle size is determined by multiplying the measured value of particle size by a relative particle amount (differential %), and dividing the product by the total (100%) of relative particle amounts. Note that the average particle size is an average diameter of particles.

### [Component (C)]

Component (C) is an irregular shape aluminum nitride powder having a BET specific surface area of 1.0 to 4.0 m²/g, and having an average particle size of 0.5 to 5 µm. As component (C), one irregular shape aluminum nitride powder can be used alone or two or more irregular shape aluminum nitride powders can be used in combination. The BET specific surface area of component (C) is 1.0 to 4.0 m²/g, preferably 1.5 to 3.5. The average particle size is 0.5 to 5 µm, preferably 0.6 to 3 µm. It is noted that shapes other than spherical shapes are irregular shapes. Unless the present invention is impaired, a single species may be used alone, or two or more multiple species having different average particle sizes may be used in combination. If the BET specific surface area (nitrogen gas adsorption method) of component (C) is less than 1.0 m²/g, there is a tendency that the sheet surface becomes more ragged, leading to increased interfacial thermal resistance and poor thermal conductivity. Meanwhile, if the specific surface area of component (C) exceeds 4.0 m²/g, there is a tendency that contact between particles decreases, which increases the inter-particle thermal contact resistance, leading to poor thermal conductivity. The BET specific surface area of component (C) can be analyzed by, for example, using "Macsorb (registered trademark) HM Model-1201" manufactured by Mountech Co., Ltd. (hereinafter, the same shall apply). If the average particle size of component (C) is less than 0.5 µm, there is a tendency that contact between particles decreases, which increases the inter-particle thermal contact resistance, leading to poor thermal conductivity. Meanwhile, if the average particle size of component (C) exceeds 5 µm, there is a tendency that the sheet surface becomes more ragged, which increases the interfacial thermal resistance, leading to poor thermal conductivity. It is noted that when component (C) is spherical, component (C) preferably has an average sphericity of 0.8 or higher and contains 30 or less hydroxy groups per square nanometer, as in the case of component (B). It is noted that the methods of measuring the average particle size, the average sphericity, and the hydroxy groups are the same as those for component (B).

The blending proportion of component (B) to component (C) in volume ratio ((B):(C)) is 5:5 to 8:2, preferably 5.0:5.0 to 8.0:2.0, more preferably 6:4 to 7:3. If the proportion of component (B) in volume ratio is lower than 5 (the total of components (B) and (C) is 10, hereinafter, the same shall apply), there is a tendency that component (B) and component (C) becomes difficult to load. Meanwhile, if the proportion of component (B) in volume ratio is higher than 8, component (B) and component (C) tend to be difficult to load densely, resulting in lowered thermal conductivity. Meanwhile, the total amount of components (B) and (C) is 52 to 79% by volume of the silicone composition, and, to obtain a thermal conductivity of 8.0 W/m/K or higher, the total amount is preferably 75 to 79% by volume. If the total amount of components (B) and (C) is less than 52% by volume, it is difficult to obtain a desired thermal conductivity. If the total amount of components (B) and (C) exceeds 79% by volume, component (B) and component (C) tend to be difficult to load.

### [Component (D)]

Component (D) is an organopolysiloxane containing per molecule at least one silyl group represented by the following general formula (1):

-SiR¹ₐ(OR²)₃₋ₐ (1) ,

wherein R¹ is independently an unsubstituted or substituted monovalent hydrocarbon group, R² is independently an alkyl, alkoxyalkyl, alkenyl or acyl group, and "a" is 0, 1 or 2, and having a viscosity at 25°C of 0.01 to 30 Pa·s. As component (D), a single organopolysiloxane can be used alone, or two or more organopolysiloxanes can be used in combination. This component enables surface treatment on component (B), component (C), and component (E) described later with (D) a silane coupling agent.

Component (D) is typically an organopolysiloxane having the general formula (2): 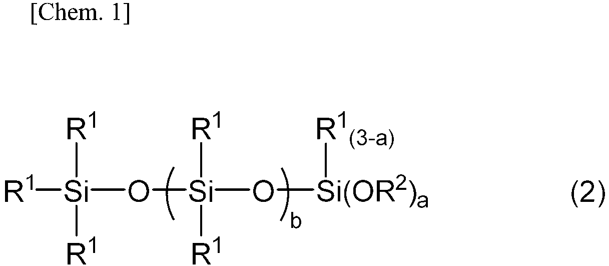 wherein R¹ is independently an unsubstituted or substituted monovalent hydrocarbon group, R² is independently an alkyl, alkoxyalkyl, alkenyl or acyl group, b is an integer of 2 to 100, and "a" is 0, 1 or 2.

In formulae (1) and (2), R¹ is independently an unsubstituted or substituted monovalent hydrocarbon group of preferably 1 to 10 carbon atoms, more preferably 1 to 6 carbon atoms, even more preferably 1 to 3 carbon atoms. Examples thereof include straight alkyl groups, branched alkyl groups, cyclic alkyl groups, alkenyl groups, aryl groups, aralkyl groups, and halogenated alkyl groups. Exemplary straight alkyl groups include methyl, ethyl, propyl, hexyl, octyl and decyl. Exemplary branched alkyl groups include isopropyl, isobutyl, tert-butyl and 2-ethylhexyl. Exemplary cyclic alkyl groups include cyclopentyl and cyclohexyl. Exemplary alkenyl groups include vinyl and allyl. Exemplary aryl groups include phenyl and tolyl. Exemplary aralkyl groups include 2-phenylethyl and 2-methyl-2-phenylethyl. Exemplary halogenated alkyl groups include 3,3,3-trifluoropropyl, 2-(nonafluorobutyl)ethyl and 2-(heptadecafluorooctyl)ethyl. R¹ is preferably a methyl or phenyl group.

In formulae (1) and (2), R² is independently an alkyl, alkoxyalkyl, alkenyl or acyl group. Exemplary alkyl groups include straight alkyl groups, branched alkyl groups and cyclic alkyl groups as exemplified above for R¹. Exemplary alkoxyalkyl groups include methoxyethyl and methoxypropyl. Exemplary alkenyl groups are as exemplified above for R¹. The number of carbon atoms thereof is preferably 1 to 8. Exemplary acyl groups include acetyl and octanoyl. R² is preferably an alkyl group, particularly preferably methyl or ethyl. The subscript b is an integer of 2 to 100, preferably 5 to 50. The subscript a is 0, 1 or 2, preferably 0.

Preferred specific examples of the organopolysiloxane as component (D) are shown below. 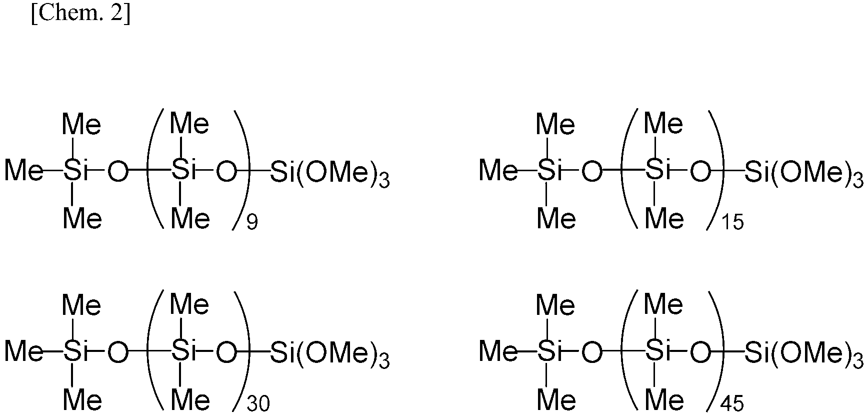 wherein Me stands for methyl.

The organopolysiloxane as component (D) has a viscosity at 25°C of 0.01 to 30 Pa·s, preferably 0.01 to 10 Pa·s, as measured by a spiral viscometer at a number of revolutions of 10 rpm. If the viscosity is lower than 0.01 Pa·s, the silicone composition is likely to undergo oil bleeding and to sag. If the viscosity exceeds 30 Pa·s, the resulting silicone composition may have extremely poor fluidity and may degrade in workability in coating operation.

Component (D) is blended in an amount of preferably 5 to 900 parts by weight, more preferably 10 to 900 parts by weight, and even more preferably 20 to 700 parts by weight per 100 parts by weight of component (A).

Silane-based coupling agents other than component (D) include vinyl-based silane coupling agents, epoxy-based silane coupling agents, acryl-based silane coupling agents, long-chain alkyl-based silane coupling agents, and the like. In combination with component (D), one of these silane-based coupling agents may be used alone or a suitable combination of two or more thereof may be used. Of these silane-based coupling agents, long-chain alkyl-based silane coupling agents are preferable, and decyltrimethoxysilane is preferable.

The method for the surface treatment on component (B), component (C), and component (E) described later with the silane-based coupling agent other than component (D) may be selected from a spray method through a fluid nozzle, an agitation method utilizing shearing forces, a dry method on a ball mill or mixer, and a wet method using water or an organic solvent. The agitation method is performed in such a manner that the spherical aluminum oxide powder are not broken. The temperature inside the system or the drying temperature after treatment employed in the dry method is determined, as appropriate, depending on the type of surface treating agent, within the range that does not allow volatilization or decomposition of the surface treating agent, and may be 80 to 180°C.

When the silane-based coupling agent other than component (D) is used, the silane-based coupling agent is preferably 0.1 to 5 parts by weight relative to 100 parts by weight of the total of component (B), component (C), and component (E) described later. When the amount is less than 0.1 parts by weight, the effect of the blending may be too small. When the silane-based coupling agent is blended in an amount exceeding 5 parts by weight, no effect consistent with the amount used may be exhibited.

### [Component (E)]

Moreover, the use of component (E) in the present invention is preferable to further increase the thermal conductivity, while maintaining the fluidity of the inventive silicone composition. Component (E) of the present invention is an aluminum nitride powder having an oxygen content of 0.5% by weight or lower, having a BET specific surface area less than 1.0 m²/g, and having an average particle size of 10 to 40 µm, in which the ratio of coarse particles of 44 to 105 µm is 10.0% by weight or less of the entire component (E) in a volume-based laser diffraction particle size distribution. Such an aluminum nitride powder can be used alone or two or more such aluminum nitride powders can be used in combination.

The oxygen content in component (E) is 0.5% by weight, preferably 0.2% by weight or lower. The lower limit is not particularly limited, and may be 0.01% by weight, or even 0% by weight. When the amount of oxygen blended, which is indicative of the nitriding ratio of component (E) is within the above-described range, the thermal conductivity of the silicone composition is further improved. An amount of oxygen blended exceeding 0.5% by weight results in small crystallite diameters, leading to poor chemical purity as component (E). For this reason, thermal characteristics after moisture exposure may deteriorate. It is noted that the oxygen content in component (E) can be measured with an oxygen nitrogen analyzer, and can be analyzed by comparison with a silicon nitride standard sample. As the oxygen nitrogen analyzer, EMGA-920 manufactured by Shimadzu Corporation can be used.

The BET specific surface area (nitrogen gas adsorption method) of component (E) is preferably as low as possible from the viewpoint of increasing the thermal conductivity of the silicone composition, and the BET specific surface area may be 1.0 m²/g or less, more preferably 0.9 or less. The lower limit value of the BET specific surface area is not particularly limited, and may be 0.05 m²/g, considering the upper limit of the average particle size specified for component (C) and the specified proportion of the coarse particles. For example, the BET specific surface area of component (E) can be analyzed by using "Macsorb (registered trademark) HM Model-1201" manufactured by Mountech Co., Ltd.

The average particle size of component (E) is 10 to 40 µm, preferably 20 to 40 µm in a laser diffraction particle size distribution (volume-based). It is noted that if the average particle size is less than 10 µm, component (E) is difficult to load into the resin, leading to extremely high viscosity in some cases. Meanwhile, even though an average particle size exceeding 40 µm is preferable from the viewpoint of increasing the thermal conductivity of the silicone composition, this may facilitate oil separation with the lapse of time. In addition, the ratio of coarse particles of 44 to 105 µm is 10.0% by weight or less, preferably 8.0% by weight or less of the entire component (E) in a volume-based laser diffraction particle size distribution. When the ratio of coarse particles of 44 to 105 µm is 10.0% by weight or less of the entire component (E), both the thermal resistance and the high heat conductivity are achieved at higher levels. The lower limit value of the ratio of coarse particles of 44 to 105 µm in a laser diffraction particle size distribution is not particularly limited, and may be about 0.01% by weight. Meanwhile, when the ratio of coarse particles of 44 to 105 µm is 10.0% by weight or less of the entire component (E), a desired thermal resistance may be achieved more likely. If the ratio of coarse particles of 44 to 105 µm exceeds 10.0% by weight of the total, a thickness of 44 to 105 µm cannot be obtained in some cases.

Component (E) may be obtained by a reductive nitriding method, a direct nitriding method, or the like, as long as the obtained component (E) meets the requirements of the present invention. However, the method is not particularly limited. Of these methods, component (E) is preferably obtained by a direct nitriding method, from the viewpoint that one having an oxygen content of 0.5% by weight or lower can be obtained more easily. Component (E) obtained by a direct nitriding method has improved chemical purity, leading to further improved thermal characteristics after moisture exposure.

The method for producing component (E) is not particularly limited, and, for example, may be conducted according to a known direct nitriding method (including the combustion synthesis method). A representative example is a method of nitriding an aluminum metal powder alone in a nitrogen atmosphere of 0.2 to 3 MPa. Optionally, the powder can be pulverized, and the pulverization method can be conducted, for example, according to a known method using a ball mill, a jet mill, a crusher, or the like.

Another example may be a method comprising a step of subjecting component (E) obtained by a direct nitriding method to a heat treatment under a non-oxidative atmosphere at 1,600 to 2,000°C. This method is preferable, because particles having irregular shapes with angular portions can be converted to particles having rounded shapes free of the angular portions, lowering the viscosity of the silicone composition. It is noted that the rounded shapes are difficult to obtain at 1,600°C or below, and that particles of component (E) are sintered with each other at a temperature exceeding 2,000°C, so that a desired average particle size cannot be achieved in some cases.

The shape of component (E) may be a spherical, polyhedral, or irregular shape, unless the present invention is impaired. The shape is not particularly limited, unless the present invention is impaired. In particular, a rounded shape is preferable, from the viewpoints that the initial viscosity of the silicone composition is lowered, and also that change in viscosity is small even in a 200°C treatment and the heat resistance is further improved. It is noted that the "rounded shape" as used herein refers to a shape having an aspect ratio of 2.0 or lower.

Component (E) is added preferably within a range not impairing the benefits of the invention. Specifically, when component (E) is blended, the amount of component (E) is preferably 30 to 35% by volume based on the total amount of the silicone composition, so as not to remarkably lower the thermal conductivity of the heat conductive silicone composition. When the amount blended is more than 30% by volume, the thermal conductivity of the silicone composition can be increased further. Meanwhile, if the amount blended exceeds 35% by volume, the viscosity of the silicone composition may be excessively high. It is noted that the median particle size can be determined by the laser diffraction method, for example, by using, a "laser diffraction particle size distribution analyzer SALD-2300" manufactured by Shimadzu Corporation.

When the component (E) is blended, the total amount of components (B), (C), and (E) is preferably 80 to 85% by volume of the heat conductive silicone composition, more preferably 80 to 84% by volume. When the amount blended is 80% by volume or more, the thermal conductivity of the silicone composition can be increased further. If the amount blended exceeds 85% by volume, the heat conductive filler may be difficult to load.

The heat conductive silicone composition of the invention may be used as such or converted to a curable composition by further blending a curing agent.

The curable heat conductive silicone composition may take any of the following three forms. By using any one of the organopolysiloxanes (A-I) to (A-III) as the organopolysiloxane (A) or base polymer and blending the above-described heat conductive fillers (B) and (C), or if necessary, (B), (C) and (E), the composition may be formulated to:
[I] a heat conductive silicone composition of addition reaction cure type,
[II] a heat conductive silicone composition of condensation reaction cure type, or
[III] a heat conductive silicone composition of organic peroxide cure type.

Of these, [1] heat conductive silicone composition of addition reaction cure type is preferred because of fast cure and no by-product formation. Each composition is described below in detail.

### [I] Heat conductive silicone composition of addition reaction cure type

In the embodiment wherein the silicone composition is a heat conductive silicone composition of addition reaction cure type adapted to cure through hydrosilylation reaction, it uses component (A-I) shown above as component (A) and further contains the following components, of which curing agents are components (F) and (G) shown below:
(F) an organohydrogenpolysiloxane having at least two directly silicon-bonded hydrogen atoms,
(G) a platinum group metal-based curing catalyst, and optionally
(H) an addition reaction regulator.

### [Component (F)]

Component (F) is an organohydrogenpolysiloxane having at least two directly silicon-bonded hydrogen atoms, which acts as a crosslinker. Examples of silicon-bonded groups of the organohydrogenpolysiloxane include straight alkyl groups, branched alkyl groups, cyclic alkyl groups, aryl groups, aralkyl groups, and halogenated alkyl group as mentioned above. Of these, alkyl and aryl groups are preferred, methyl and phenyl groups are more preferred. Component (F) has a viscosity at 25°C which is preferably in the range of 1 to 100,000 mm²/s, more preferably 1 to 5,000 mm²/s, but not limited thereto. Component (F) has a molecular structure which may be straight, branched, partially branched straight, cyclic, or dendritic (dendrimer), but is not limited thereto. Examples of the organopolysiloxane include a homopolymer having such a molecular structure, a copolymer composed of such molecular structures, and mixtures of these polymers. The viscosity described above is a kinematic viscosity which is a value measured with an Ostwald viscometer at 25°C (hereinafter, the same shall apply).

Examples of component (F) include molecular chain both end dimethylhydrogensiloxy-capped dimethylpolysiloxane, molecular chain both end trimethylsiloxy-capped dimethylsiloxane/methylhydrogensiloxane copolymers, molecular chain both end dimethylhydrogensiloxy-capped dimethylsiloxane/methylhydrogensiloxane copolymers, and organosiloxane copolymers consisting of siloxane units of the formula: (CH₃)₃SiO_{1/2}, siloxane units of the formula: (CH₃)₂HSiO_{1/2}, and siloxane units of the formula: SiO_{4/2}, which may be used alone or in a suitable combination of two or more.

Component (F) is blended in an amount necessary for the silicone composition to cure, specifically such that the amount of silicon-bonded hydrogen atoms in component (F) is preferably in the range of 0.1 to 10 moles, more preferably 0.1 to 5 moles, even more preferably 0.1 to 3.0 moles per mole of silicon-bonded alkenyl groups in component (A-I). These ranges are preferable for the following reasons. If the amount of component (F) blended is less than the lower limit of the range, there is a tendency that the resulting silicone composition does not cure sufficiently. If the amount of component (F) blended exceeds the upper limit of the range, the resulting cured silicone may become very hard and develop a large number of cracks on the surface.

Component (G) is a platinum group metal-based curing catalyst for promoting the cure of the silicone composition. Examples include chloroplatinic acid, alcohol solutions of chloroplatinic acid, platinum-olefin complexes, platinum-alkenylsiloxane complexes, and platinum-carbonyl complexes.

Component (G) is blended in an amount necessary for the heat conductive silicone composition to cure, specifically such that the amount of platinum metal in component (G) is preferably in the range of 0.01 to 1,000 ppm, more preferably 0.1 to 500 ppm by weight based on component (A-I). If the amount of component (G) blended is less than the lower limit of the range, there is a tendency that the resulting silicone composition does not cure sufficiently. Even when the amount of component (G) blended exceeds the upper limit of the range, component (G) does not remarkably accelerate the cure speed of the resulting silicone composition.

### (H) Cure reaction inhibitor

A cure reaction inhibitor can be blended for adjusting the cure speed of the silicone composition to improve the handleability and workability thereof. Suitable cure reaction inhibitors include acetylene compounds such as 2-methyl-3-butyn-2-ol, 2-phenyl-3-butyn-2-ol, and 1-ethynyl-1-cyclohexanol; en-yne compounds such as 3-methyl-3-penten-1-yne and 3,5-dimethyl-3-hexen-1-yne; hydrazine compounds, phosphine compounds, and mercaptan compounds, which may be used alone or in suitable combinations of two or more.

The amount of component (H) blended is not particularly limited, and is preferably 0.0001 to 1.0% by weight of the silicone composition. As long as the amount of component (H) is in the range, the silicone composition is more adequate in workability and cure speed.

### [II] Heat conductive silicone composition of condensation reaction cure type

In the embodiment wherein the silicone composition is a heat conductive silicone composition of condensation reaction cure type, it uses component (A-II) shown above as component (A) and further contains the following components, of which the curing agent is component (I) shown below:
(I) a silane having at least three silicon-bonded hydrolyzable groups per molecule or a partial hydrolyzate thereof, and optionally,
(J) a condensation reaction catalyst.

Examples of the silicon-bonded hydrolyzable group in component (I) include alkoxy, alkoxyalkoxy, acyloxy, ketoxime, alkenoxy, amino, aminoxy, and amide groups as mentioned above. Besides the hydrolyzable group, the silane may have a group bonded to a silicon atom, for example, any of straight alkyl, branched alkyl, cyclic alkyl, alkenyl, aryl, aralkyl, and halogenated alkyl groups as mentioned above. Examples of the silane or partial hydrolyzate thereof include methyltriethoxysilane, vinyltriethoxysilane, vinyltriacetoxysilane, and ethyl orthosilicate.

Component (I) is blended in an amount necessary for the silicone composition to cure, specifically such that the amount of component (I) is preferably in the range of 0.01 to 20 parts by weight, more preferably 0.1 to 10 parts by weight per 100 parts by weight of component (A-II). If the amount of the silane or partial hydrolyzate thereof blended is less than the lower limit of the range, the resulting silicone composition may degrade in its storage stability. If the amount exceeds the upper limit of the range, the resulting silicone composition may be substantially retarded in cure.

Component (J) is an optional component, and is not essential, for example, when a silane having a hydrolyzable group such as an aminoxy, amino or ketoxime group is used as the curing agent. Examples of the condensation reaction catalyst include organic titanates such as tetrabutyl titanate and tetraisopropyl titanate; organic titanium chelate compounds such as diisopropoxybis(acetylacetate)titanium and diisopropoxybis(ethylacetoacetate)titanium; organic aluminum compounds such as aluminum tris(acetylacetonate) and aluminum tris(ethylacetoacetate); organic zirconium compounds such as zirconium tetra(acetylacetonate) and zirconium tetrabutyrate; organic tin compounds such as dibutyltin dioctoate, dibutyltin dilaurate, and butyltin 2-ethylhexanoate; metal salts of organic carboxylic acids such as tin naphthenate, tin oleate, tin butyrate, cobalt naphthenate, and zinc stearate; amine compounds and salts thereof such as hexylamine and dodecylamine phosphate; quaternary ammonium salts such as benzyltriethylammonium acetate; lower fatty acid salts of alkali metals such as potassium acetate and lithium nitrate; dialkylhydroxylamines such as dimethylhydroxylamine and diethylhydroxylamine; and organic silicon compounds having a guanidyl group.

When used, component (J) is blended in an amount necessary for the silicone composition to cure, specifically such that the amount of component (J) is preferably in the range of 0.01 to 20 parts by weight, more preferably 0.1 to 10 parts by weight per 100 parts by weight of component (A). These ranges are preferable for the following reasons. If the amount of the catalyst blended is less than the lower limit of the range in a case where the catalyst is necessary, there is a tendency that the resulting silicone composition does not cure sufficiently. If the amount exceeds the upper limit of the range, there is a tendency that the resulting silicone composition degrades in its storage stability.

### [III] Heat conductive silicone composition of organic peroxide cure type

In the embodiment wherein the silicone composition is a heat conductive silicone composition of organic peroxide cure type, it uses component (A-III) shown above as component (A) and further contains the following component, which is the following organic peroxide (K) serving as a curing agent.

Examples of the organic peroxide (K) include benzoyl peroxide, dicumyl peroxide, 2,5-dimethylbis(2,5-tert-butylperoxy)hexane, di-tert-butyl peroxide, and tert-butyl perbenzoate.

Component (K) is blended in an amount necessary for the silicone composition to cure, specifically such that the amount of component (K) is preferably in the range of 0.1 to 5 parts by weight per 100 parts by weight of component (A-III) or organopolysiloxane. If the amount of component (K) blended is less than the lower limit of the range, there is a tendency that the resulting silicone composition does not cure sufficiently. Even when component (K) is blended in an amount exceeding the upper limit of the range, component (K) does not remarkably accelerate the cure speed of the resulting silicone composition but rather can cause voids.

The inventive silicone composition may further contain other optional components as long as the object of the invention is not impaired. Exemplary optional components include fillers such as zinc oxide, fumed silica, precipitated silica, and fumed titanium oxide and such fillers which are treated on their surface with organosilicon compounds to be hydrophobic; tackifiers such as 3-glycidoxypropyltrimethoxysilane and 3-methacryloxypropyltrimethoxysilane; pigments, dyes, fluorescent dyes, heat resistance additives, and flame retardants such as triazole compounds, and plasticizers. It is noted that a heat conductive filler other than component (B) may be blended as long as the benefits of the invention are not impaired. Examples thereof include aluminum powder, copper powder, silver powder, nickel powder, gold powder, zinc oxide powder, magnesium oxide powder, boron nitride powder, aluminum nitride powder, diamond powder, and carbon powder.

### [Production method]

The inventive silicone composition may be prepared by mixing predetermined amounts of the foregoing components until uniform. An example may be a production method, comprising the step of mixing
(A) an organopolysiloxane,
(B) a spherical aluminum oxide powder having an average sphericity of 0.8 or higher, containing 30 or less hydroxy groups per square nanometer, and having an average particle size of 50 to 150 µm,
(C) an irregular shape aluminum nitride powder having a BET specific surface area of 1.0 to 4.0 m²/g, and having an average particle size of 0.5 to 5 µm, and optionally
(E) an aluminum nitride powder having an amount of oxygen blended of 0.5% by weight or less, having a BET specific surface area less than 1.0 m²/g, and having an average particle size of 10 to 40 µm, in which the ratio of coarse particles of 44 to 105 µm is 10.0% by weight or less of the entire component (E) in a volume-based laser diffraction particle size distribution, and
(D) an organopolysiloxane containing per molecule at least one silyl group represented by the following general formula (1):

   -SiR¹ₐ(OR²)₃₋ₐ (1) ,

   wherein R¹ is independently an unsubstituted or substituted monovalent hydrocarbon group, R² is independently an alkyl, alkoxyalkyl, alkenyl or acyl group, and "a" is 0, 1 or 2, and having a viscosity at 25°C of 0.01 to 30 Pa·s, wherein
the resultant blending proportion of component (B) to component (C) in volume ratio ((B):(C)) is 5:5 to 8:2, and the resultant total amount of components (B) and (C) is 52 to 79% by volume of the heat conductive silicone composition.

It is noted that when component (E) is blended, the resultant total amount of components (B), (C), and (E) is 80 to 85% by volume of the silicone composition.

### [Heat conductive silicone composition]

The heat conductive silicone composition has a thermal conductivity of preferably 8.0 W/m·K or higher, more preferably 8.5 W/m·K or higher, even more preferably 9.0 W/m·K or higher as measured by the hot disk method according to ISO 22007-2. The upper limit is not particularly limited and it is typically up to 11.0 W/m·K though a higher value is permissible. It is noted that the measuring temperature is 25°C.

The heat conductive silicone composition has a viscosity at 25°C of 30 to 800 Pa·s, preferably 100 to 600 Pa·s as measured by a spiral viscometer at a number of revolutions of 10 rpm.

### [Cured product]

Where the silicone composition is curable, the curing method is not limited. Exemplary methods include a method of molding the silicone composition and then allowing it to stand at normal temperature, and a method of molding the silicone composition and then heating it at 40 to 200°C. Thus, a molded silicone elastomer article can be obtained. The resulting silicone rubber is not limited in form and may take the form of, for example, gel, low-hardness rubber, or high-hardness rubber. The silicone rubber preferably has a cured thickness of 150 µm or more. The upper limit is not particularly limited, and is preferably 5 mm or less, considering the size of heat-generating electronic parts using this composition. It is noted that the hardness of the cured product is preferably 3 to 90, more preferably 5 to 80, as measured by casting the silicone composition into a mold designed to provide a cured thickness of 6 mm, allowing the silicone composition to cure at 100°C for 1 hour, and then measuring the cured product having a thickness of 6 mm with a Shore OO durometer 30 seconds after application of pressure.

### EXAMPLES

The components used in Examples and Comparative Examples are shown below. The present invention is described specifically by showing Examples and Comparative Examples below, but the invention is not limited to Examples below. In the formulae below, Me stands for methyl, and the siloxane units may be bonded in any order.

Components used are shown below.

### Component (A)

A-1: a dimethylpolysiloxane capped at both ends with dimethylvinylsilyl groups, having an absolute viscosity (25°C) of 400 mPa·s, having a specific gravity (25°C) of 0.98, and having a vinyl content of 0.018 moL/100 g.
A-2: a dimethylsiloxane/diphenylsiloxane copolymer capped with trimethylsiloxy groups at both ends of the molecular chain, having a specific gravity (25°C) of 1.07, and having a kinematic viscosity (25°C) of 400 mm²/s
A-3: a dimethylsiloxane/diphenylsiloxane copolymer capped with trimethylsiloxy groups at both ends of the molecular chain, having a specific gravity (25°C) of 1.00, and having a kinematic viscosity (25°C) of 1,000 mm²/s

### Component (B)

A spherical aluminum oxide having parameters shown in the table below (having a specific gravity of 3.98).

**[Table 1]**

| Type | Average particle size (µm) | Average sphericity | Number of hydroxy groups (/nm²) |
|---|---|---|---|
| B-1 | 51 | 0.85 | 25 |
| B-2 | 103 | 0.90 | 20 |
| B-3 | 147 | 0.90 | 15 |
| B-4 Comparison | 42 | 0.90 | 25 |
| B-5 Comparison | 161 | 0.90 | 15 |
| B-6 Comparison | 53 | 0.70 | 20 |
| B-7 Comparison | 52 | 0.90 | 45 |

### Component (C)

An irregular shape aluminum nitride powder having parameters shown in the table below (having a specific gravity of 3.32).

**[Table 2]**

| Type | BET specific surface area (m²/g) | Average particle size (µm) |
|---|---|---|
| C-1 | 1.1 | 4.7 |
| C-2 | 2.8 | 0.9 |
| C-3 Comparison | 0.6 | 7.8 |
| C-4 Comparison | 4.9 | 0.4 |

### Component (D)

D-1: an organopolysiloxane represented by the following formula, having a specific gravity (25°C) of 0.97, and having a kinematic viscosity (25°C) of 30 mm²/s. 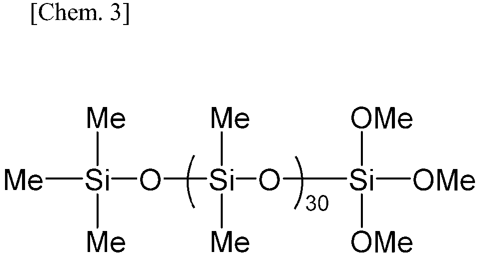 wherein Me stands for methyl.

### Component (E)

**[Table 3]**

| Type | Oxygen content (%) | BET specific surface area (m²/g) | Average particle size (µm) | Proportion of coarse particles (%) | Method for producing aluminum nitride | Shapes of particles |
|---|---|---|---|---|---|---|
| E-1 | 0.07 | 0.20 | 20.9 | 8.76 | Direct nitriding method | Rounded shapes |
| E-2 | 0.10 | 0.18 | 33.0 | 9.42 | Direct nitriding method | Rounded shapes |
| E-3 | 0.30 | 0.94 | 11.4 | 6.72 | Direct nitriding method | Irregular shapes |

### Component (F)

F-1: an organohydrogenpolysiloxane represented by the following formula, having a specific gravity (25°C) of 0.97, and having a kinematic viscosity (25°C) of 28 mm²/s. It is noted that the order in which the siloxane units are bonded is not limited to that shown below. 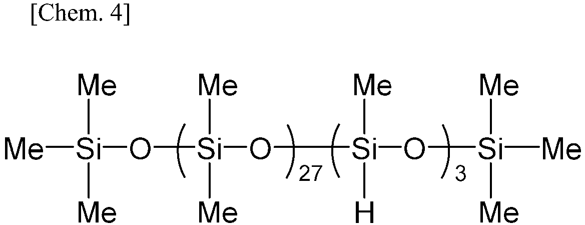 wherein Me stands for methyl.
F-2: an organohydrogenpolysiloxane represented by the following formula, having a specific gravity (25°C) of 0.97, and having a kinematic viscosity (25°C) of 17 mm²/s. 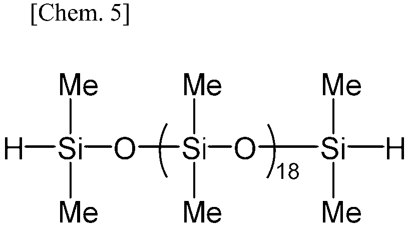
wherein Me stands for methyl.

### Component (G)

G-1: a chloroplatinic acid-1,3-divinyltetramethyldisiloxane complex having a specific gravity (25°C) of 1.00, and having a platinum concentration of 1% by weight.

### Component (H)

H-1: a 50% toluene solution of 1-ethynyl-1-cyclohexanol having a specific gravity (25°C) of 0.92

### [Examples 1 to 7 and Comparative Examples 1 to 6]

Silicone compositions were prepared by the following procedure using the foregoing components, and heat conductive molded articles were obtained by using these silicone compositions. The compositions and molded articles were evaluated by the methods shown below. The results are also shown in tables.

The silicone compositions were obtained by mixing the above-described components in the blending amounts shown in Tables 1 and 2 as follows. Specifically, components (A), (B), (C), and (D), and, when shown in the table, component (E) were taken in the blending amounts shown in the tables into a 5-L gate mixer (trade name: 5-L planetary mixer manufactured by Inoue Mfg., Inc.) where they were deaerated, heated and mixed at 150°C for 2 hours. This was followed by cooling down to normal temperature (25°C), adding component (G), mixing at room temperature (25°C) until uniform, subsequently adding component (H), and mixing at room temperature (25°C) until uniform. This was further followed by adding components (E) and (F), and deaerating and mixing at room temperature until uniform. The silicone compositions thus obtained were evaluated for viscosity, cured hardness, and cured thermal conductivity by the methods shown below. The results are also shown in the tables.

### [Evaluation of viscosity]

The viscosity (initial) of each silicone composition was a value at 25°C, which were measured by using a spiral viscometer: Malcom viscometer (Model PC-10AA, at a number of revolutions of 10 rpm).

### [Evaluation of cured hardness]

Each silicone composition was cast into a mold designed to provide a cured thickness of 6 mm, and allowed to cure at 100°C for 1 hour. Next, the obtained cured product having a thickness of 6 mm was measured with a Shore OO durometer.

### [Evaluation of thermal conductivity]

Each silicone composition was cast into a mold designed to provide a cured thickness of 6 mm, and allowed to cure at 100°C for 1 hour. Next, the obtained cured product having a thickness of 6 mm was measured for thermal conductivity at 25°C by using a hot disk thermal property tester TPS 2500 S manufactured by Kyoto Electronics Co., Ltd. (the hot disk method according to ISO 22007-2).

**[Table 4]**

| Blending amount (pbw) | | Example 1 | Example 2 | Example 3 | Example 4 | Example 5 | Example 6 | Example 7 |
|---|---|---|---|---|---|---|---|---|
| (A) | A-1 | 28 | 28 | 28 | 28 | 28 | 28 | 28 |
| | A-2 | 1.75 | 1.75 | 1.75 | 1.75 | 1.75 | 1.75 | 1.75 |
| | A-3 | 1.75 | 1.75 | 1.75 | 1.75 | 1.75 | 1.75 | 1.75 |
| (B) | B-1 | 1,148 | | | | | 1,148 | |
| | B-2 | | 1,148 | | 1,148 | 1,148 | | |
| | B-3 | | | 1,148 | | | | 1,148 |
| | B-4 | | | | | | | |
| | B-5 | | | | | | | |
| | B-6 | | | | | | | |
| | B-7 | | | | | | | |
| (C) | C-1 | 626 | | | 626 | 626 | 626 | |
| | C-2 | | 626 | 626 | | | | 626 |
| | C-3 | | | | | | | |
| | C-4 | | | | | | | |
| (D) | D-1 | 112 | 112 | 112 | 112 | 112 | 112 | 112 |
| (E) | E-1 | | | | 918 | | | |
| | E-2 | | | | | 918 | | 918 |
| | E-3 | | | | | | 918 | |
| (F) | F-1 | 2.45 | 2.45 | 2.45 | 2.45 | 2.45 | 2.45 | 2.45 |
| | F-2 | 2.17 | 2.17 | 2.17 | 2.17 | 2.17 | 2.17 | 2.17 |
| (G) | G-1 | 0.56 | 0.56 | 0.56 | 0.56 | 0.56 | 0.56 | 0.56 |
| (H) | H-1 | 0.3 | 0.3 | 0.3 | 0.3 | 0.3 | 0.3 | 0.3 |
| (B)+(C) total volume (%) | | 75.7 | 75.7 | 75.7 | 52.6 | 52.6 | 52.6 | 52.6 |
| (B)+(C)+(E) total volume (%) | | 75.7 | 75.7 | 75.7 | 83.1 | 83.1 | 83.1 | 83.1 |
| (E) volume (%) | | 0 | 0 | 0 | 30.5 | 30.5 | 30.5 | 30.5 |
| (B)/(C) volume ratio | | 6.05/3.95 | 6.05/3.95 | 6.05/3.95 | 6.05/3.95 | 6.05/3.95 | 6.05/3.95 | 6.05/3.95 |
| Viscosity (Pa·s) | | 242 | 221 | 209 | 289 | 262 | 341 | 275 |
| Cured hardness (Shore OO) | | 41 | 38 | 35 | 51 | 49 | 56 | 52 |
| Thermal conductivity (W/m/K) | | 8.1 | 8.3 | 8.5 | 9.5 | 9.7 | 9.1 | 10.2 |

**[Table 5]**

| Blending amount (pbw) | | Comparative Example 1 | Comparative Example 2 | Comparative Example 3 | Comparative Example 4 | Comparative Example 5 | Comparative Example 6 |
|---|---|---|---|---|---|---|---|
| (A) | A-1 | 28 | 28 | 28 | 28 | 28 | 28 |
| | A-2 | 1.75 | 1.75 | 1.75 | 1.75 | 1.75 | 1.75 |
| | A-3 | 1.75 | 1.75 | 1.75 | 1.75 | 1.75 | 1.75 |
| (B) | B-1 | 880 | | | | | |
| | B-2 | | 1,500 | | | | |
| | B-3 | | | | | | |
| | B-4 (comparison) | | | 1,148 | | | |
| | B-5 (comparison) | | | | 1,148 | | |
| | B-6 (comparison) | | | | | 1,148 | |
| | B-7 (comparison) | | | | | | 1,148 |
| (C) | C-1 | 894 | 274 | | | | |
| | C-2 | | | | | 626 | 626 |
| | C-3 (comparison) | | | | 626 | | |
| | C-4 (comparison) | | | 626 | | | |
| (D) | D-1 | 112 | 112 | 112 | 112 | 112 | 112 |
| (E) | E-1 | | | | | | |
| | E-2 | | | | | | |
| | E-3 | | | | | | |
| (F) | F-1 | 2.45 | 2.45 | 2.45 | 2.45 | 2.45 | 2.45 |
| | F-2 | 2.17 | 2.17 | 2.17 | 2.17 | 2.17 | 2.17 |
| (G) | G-1 | 0.56 | 0.56 | 0.56 | 0.56 | 0.56 | 0.56 |
| (H) | H-1 | 0.3 | 0.3 | 0.3 | 0.3 | 0.3 | 0.3 |
| (B)+(C) total volume (%) | | 76.2 | 75.0 | 75.7 | 75.7 | 75.7 | 75.7 |
| (B)/(C) volume ratio | | 4.51/5.49 | 8.20/1.80 | 6.05/3.95 | 6.05/3.95 | 6.05/3.95 | 6.05/3.95 |
| Viscosity (Pa·s) | | * | 832 | Unmeasurable | * | Unmeasurable | Unmeasurable |
| Cured hardness (Shore OO) | | | 44 | 46 | | 42 | 44 |
| Thermal conductivity (W/m/K) | | | 7.2 | 8.0 | | 7.9 | 8.2 |

| | | | | | | | |
|---|---|---|---|---|---|---|---|
| * unmeasurable due to inhibited kneading | | | | | | | |

## Claims

1. A heat conductive silicone composition, comprising:
(A) an organopolysiloxane;
(B) a spherical aluminum oxide powder having an average sphericity of 0.8 or higher, containing 30 or less hydroxy groups per square nanometer, and having an average particle size of 50 to 150 µm;
(C) an irregular shape aluminum nitride powder having a BET specific surface area of 1.0 to 4.0 m²/g, and having an average particle size of 0.5 to 5 µm; and
(D) an organopolysiloxane containing per molecule at least one silyl group represented by the following general formula (1):
-SiR¹ₐ(OR²)₃₋ₐ (1) ,
wherein R¹ is independently an unsubstituted or substituted monovalent hydrocarbon group, R² is independently an alkyl, alkoxyalkyl, alkenyl or acyl group, and "a" is 0, 1 or 2, and having a viscosity at 25°C of 0.01 to 30 Pa·s, wherein
a blending proportion of component (B) to component (C) in volume ratio ((B):(C)) is 5:5 to 8:2, the total amount of components (B) and (C) is 52 to 79% by volume of the heat conductive silicone composition, and the heat conductive silicone composition has a viscosity at 25°C of 30 to 800 Pa·s as measured by a spiral viscometer at a number of revolutions of 10 rpm and has a thermal conductivity of 8.0 W/m·K or higher as measured by the hot disk method according to ISO 22007-2.

2. The heat conductive silicone composition according to claim 1, further comprising (E) an aluminum nitride powder having an oxygen content of 0.5% by weight or lower, having a BET specific surface area less than 1.0 m²/g and having an average particle size of 10 to 40 µm, in which the ratio of coarse particles of 44 to 105 µm is 10.0% by weight or less of the entire component (E) in a volume-based laser diffraction particle size distribution.

3. The heat conductive silicone composition according to claim 2, wherein
the total amount of components (B), (C) and (E) is 80 to 85% by volume of the heat conductive silicone composition,
the amount of component (E) is 30 to 35% by volume of the heat conductive silicone composition, and
the heat conductive silicone composition has a thermal conductivity of 8.5 W/m·K or higher as measured by the hot disk method according to ISO 22007-2.

4. The heat conductive silicone composition according to claim 1, further comprising a curing agent.

5. The heat conductive silicone composition according to claim 4, which is of addition reaction cure type, condensation reaction cure type or organic peroxide cure type.

6. The heat conductive silicone composition according to claim 5, which is of addition reaction cure type.

7. A cured product of the heat conductive silicone composition according to any one of claims 4 to 6.

8. A production method for producing the heat conductive silicone composition according to any one of claims 1 to 6, comprising the step of mixing
(A) an organopolysiloxane,
(B) a spherical aluminum oxide powder having an average sphericity of 0.8 or higher, containing 30 or less hydroxy groups per square nanometer, and having an average particle size of 50 to 150 µm,
(C) an irregular shape aluminum nitride powder having a BET specific surface area of 1.0 to 4.0 m²/g, and having an average particle size of 0.5 to 5 µm, and
(D) an organopolysiloxane containing per molecule at least one silyl group represented by the following general formula (1):
-SiR¹ₐ(OR²)₃₋ₐ (1) ,
wherein R¹ is independently an unsubstituted or substituted monovalent hydrocarbon group, R² is independently an alkyl, alkoxyalkyl, alkenyl or acyl group, and "a" is 0, 1 or 2, and having a viscosity at 25°C of 0.01 to 30 Pa·s, wherein
the resultant blending proportion of component (B) to component (C) in volume ratio ((B):(C)) is 5:5 to 8:2, and the resultant total amount of components (B) and (C) is 52 to 79% by volume of the heat conductive silicone composition.
